# EUROPÄISCHE PATENTSCHRIFT

(11) **EP 0 677 411 B1**
(45) Veröffentlichungstag und Bekanntmachung des Hinweises auf die Patenterteilung: **04.06.1997**
(21) Anmeldenummer: 95102374.6
(22) Anmeldetag: 21.02.1995
(51) Int. Cl.: B60K 1/04, B60L 11/18

(54) **Anordnung eines Antriebsaggregats in einem Elektrofahrzeug**
Drive unit mounting for an electric vehicle
Disposition d'un ensemble de propulsion dans un véhicule électrique

(30) Priorität: 12.04.1994 DE 4412451
(43) Veröffentlichungstag der Anmeldung: 18.10.1995
(73) Patentinhaber: DAIMLER-BENZ AKTIENGESELLSCHAFT, 70567 Stuttgart (DE)
(72) Erfinder: Riemer,Bernd, Ing., D-70374 Stuttgart (DE); Klaiber, Thomas, Dipl. Ing., D-71384 Weinstadt (DE)

(56) Entgegenhaltungen:
- WO-A-94/05047
- US-A- 4 081 693
- US-A- 5 193 635
- US-A- 5 248 566
- JOURNAL OF POWER SOURCES, Bd. 37, Nr. 1 / 02, 1.Januar 1992 LAUSANNE, CH, Seiten 181-188, XP 000258153 PRATER K B 'SOLID POLYMER FUEL CELL DEVELOPMENTS AT BALLARD'

## Beschreibung

Die Erfindung betrifft eine Anordnung eines Antriebsaggregats in einem Elektrofahrzeug gemäß dem Oberbegriff des Hauptanspruchs.

Aus der US-PS 51 93 635 ist ein Fahrzeug, welches ein Brennstoffzellensystem und einen Elektrofahrmotor aufweist, bekannt. Bei dieser Anordnung ist das gesamte Brennstoffzellensystem, welches aus einem Reformer, dem Brennstoffzellen-Stack und zwei Kompressoren besteht, auf einem gemeinsamen Rahmen montiert und im Bereich des Fahrzeugschwerpunktes angeordnet.

Bei konventionellen Fahrzeugen besteht aber die Schwierigkeit, daß sich im Bereich des Fahrzeugschwerpunktes die Fahrgastzelle befindet, so daß es nicht möglich ist, ein komplettes Brennstoffzellensystem in dieser Position anzuordnen, ohne das Platzangebot für die Insassen erheblich zu beeinträchtigen.

Die Aufgabe der Erfindung besteht darin, eine Anordnung für ein Antriebsaggregat in einem Fahrzeug zu schaffen, mit der ein Brennstoffzellensystem in einem konventionellen Fahrzeug ohne Beeinträchtigung des Fahrgastraumes, unter Reduzierung des benötigten Bauraumes und bei gleichzeitiger Reduzierung des Luftführungsweges angeordnet werden kann.

Die Aufgabe wird erfindungsgemäß durch die kennzeichnenden Merkmale des Patentanspruchs 1 gelöst.

Die Anordnung eines kompakten Systems aus Brennstoffzellen-Stack und Kompressor im Fahrzeugvorderteil weist den Vorteil auf, daß der Fahrgastraum nicht beeinträchtigt und daß der benötigte Bauraum reduziert wird. Durch die Anordnung des Kühlerlüfters, des Kompressors und eines Elektromotors auf einer gemeinsamen Antriebswelle kann der Bauraum weiter reduziert werden. Außerdem kann der Kühler an der bekannten Einbauposition verbleiben. Die Aufteilung der Brennstoffzelle auf zwei Stacks, die auf gegenüberliegenden Seiten des zentral liegenden Kompressors angeordnet sind, gewährleistet schließlich eine kurze Luftführung vom Luftfilter über den Kompressor zu den Brennstoffzellen-Stacks.

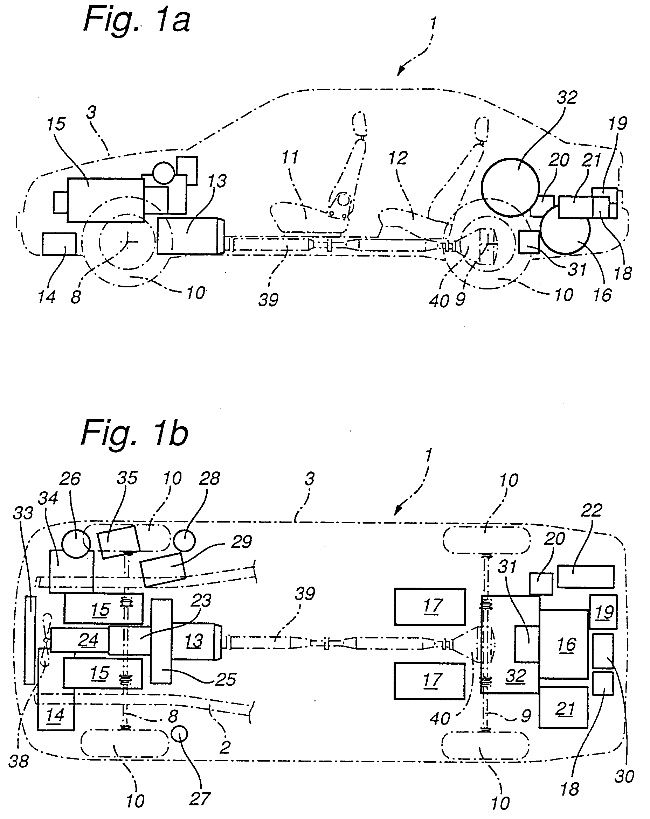

Weitere Vorteile und Ausgestaltungen gehen aus den Unteransprüchen und der Beschreibung hervor. Die Erfindung ist nachstehend anhand einer Zeichnung näher beschrieben, wobei
- Fig. 1a: eine Prinzipdarstellung eines erfindungsgemäßen Aufbaus für ein Fahrzeug in einem vertikalen Längsschnitt,
- Fig. 1b: die Anordnung aus Fig. 1a in einem horizontalen Schnitt,

Das insgesamt mit 1 gekennzeichnete Fahrzeug aus Fig. 1 weist eine von einem Fahrzeugrahmen 2 getragene Karosserie 3 auf. Am Fahrzeugrahmen 2 ist eine Vorderachse 8 und eine Hinterachse 9, an denen jeweils zwei Räder 10 angeordnet sind, angelenkt. Von dem Fahrzeugrahmen 2 werden außerdem zwei Vordersitze 11 und eine Rücksitzbank 12 gehalten. Zum Antrieb des Fahrzeugs ist im Bereich hinter der Vorderachse 8 ein Elektrofahrmotor 13, dessen Leistung mit Hilfe eines Stromstellers 14 beeinflußt werden kann, angeordnet. Der Elektrofahrmotor 13 ist mit einem Festübersetzungsgetriebe oder einem Zweigang-Automatikgetriebe verblockt und entlang der Fahrzeuglängsachse angeordnet, wobei der Antrieb des Fahrzeugs mit Hilfe einer Kardanwelle 39 und eines Differentials 40 über die Hinterachse 9 erfolgt. Selbstverständlich sind aber auch andere Antriebskonzepte, beispielsweise über zwei radnah an der Hinterachse 9 angeordnete Elektromotoren, möglich.

Die elektrische Energie für den Elektrofahrmotor 14 wird mit Hilfe eines Brennstoffzellensystems erzeugt. Das Brennstoffzellensystem besteht aus einem Brennstoffzellen-Stack 15, in dem eine Vielzahl von Einzelbrennstoffzellen integriert sind, einem Reformer 16, einem Brennstofftank 17 und einer Vielzahl von Zusatzaggregaten 18-35. Die Funktion des Brennstoffzellensystems, beispielsweise einer PEM-Brennstoffzelle mit Methanol-Reformer, ist allgemein bekannt und wird daher im folgenden nur noch kurz beschrieben.

Im Brennstofftank 17 gespeichertes Methanol und Wasser aus einem Wasserspeicher 18 werden in einem Verdampfer 19 in einen gasförmigen Zustand überführt und anschließend zum Reformer 16 geleitet. Im Reformer 16 wird dann aus dem Methanol/Wasserdampfgemisch unter Zufuhr von Wärme mit Hilfe eines katalytischen Brenners 20 im wesentlichen Wasserstoff, Kohlendioxid und Kohlenmonoxid gebildet. Zur Reduzierung des Kohlenmonoxidanteils kann zusätzlich ein CO-Oxidator 21 vorgesehen werden. Dieses H₂-haltige Brenngas wird anschließend mit Hilfe eines H₂-Kompressors 22 dem Brennstoffzellen-Stack 15 unter Druck zugeführt. Mittels eines weiteren Kompressors 23 mit zugehörigem Elektromotor 24 wird dem Brennstoffzellen-Stack zusätzlich unter Druck befeuchtete Luft zugeführt. Im Brennstoffzellen-Stack wird dann aus dem Wasserstoff und dem Sauerstoff elektrische Energie gewonnen, welche über den Stromsteller 14 zum Antrieb des Fahrzeugs 1 dem Elektrofahrmotor 13 zugeführt wird. Für den Betrieb des Brennstoffzellensystem können noch eine Vielzahl von weiteren Zusatzaggregaten, beispielsweise Ionentauscher 25, Luftfilter 26, Kondensatabscheider 27, Ausgleichsbehälter 28, Wasserpumpe 29, Reformatkühler 30, Reformer-Wärmetauscher 31, Wasserstoff-Zwischenspeicher 32, Brennstoffzellen-Kühler 33, Stromsteller 34 für elektrische Zusatzkomponenten oder Befeuchter 35 notwendig sein. Die Funktion dieser Zusatzaggregate wird als bekannt vorausgesetzt und daher nicht weiter beschrieben.

Um eine solche Vielzahl an Komponenten in einem Fahrzeug unterzubringen ist es vorteilhaft, wenn die Aggregate als separate Bauteile ausgeführt werden und somit auf die vorhandenen Einbauplätze verteilt werden können. Bei dieser Anordnung steht im mittleren Fahrzeugbereich kein Platz für die Anordnung von Antriebsaggregaten zur Verfügung. Deshalb werden in diesem Fall die Komponenten auf den vorderen und den hinteren Fahrzeugbereich verteilt. Der Brennstofftank 17 ist in zwei Teile aufgeteilt und unter der hinteren Rücksitzbank 12 angeordnet. Zusätzlich wird der Wasserstoffzwischenspeicher 32 im hinteren Fahrzeugteil unmittelbar hinter der Rücksitzbank 12 angeordnet. Der Reformer 16 und zugeordnete Zusatzaggregate bleiben im unteren Bereich des hinteren Fahrzeugbereichs angeordnet.

Im vorderen Fahrzeugbereich sind der Brennstoffzellen-Kühler 33 und Stromstellereinheiten 14, 34 vorgesehen. Die Anordnung des Kühlers 33 in seiner bekannten Einbauposition gewährleistet eine ausreichende Versorgung mit Kühlluft. Zusätzlich wird bei dieser Anordnung eine kompakte Einheit aus Brennstoffzellen-Stack 15 und Kompressor 23 mit zugehörigem Elektromotor 24 im Fahrzeugvorderteil eingebaut. Hierbei ist ein Kühlerlüfter 38 und der Kompressor 23 mit Elektromotor 24 auf einer gemeinsamen Welle, die entlang der Fahrzeuglängsachse verläuft, angeordnet. Auf dieser Welle können noch weitere Zusatzaggregate, beispielsweise die Wasserpumpe 29, montiert werden. Der BrennstoffzellenStack 15 ist auf zwei Teile aufgeteilt, die sich auf beiden Seiten des Kompressors 23 befinden. Dadurch kann ein kompaktes System mit kurzer Luftführung vom Luftfilter 26 über den Kompressor 23 zum Brennstoffzellen-Stack 15 realisiert werden. Die Aufteilung der Komponenten auf Vorder- und Hinterteil des Fahrzeugs 1 trägt außerdem zum Ausgleich der Gewichtsverteilung und damit zu einer günstigen Schwerpunktslage bei.

Bei einem Brennstoffzellensystem ohne Reformer 16 kann der oder die Brennstofftanks 17 auch im Bereich des Fahrzeugdaches oder im Gepäckraum angeordnet werden.

## Patentansprüche

1. Anordnung eines Antriebsaggregats in einem Fahrzeug, welches zumindest einen Elektrofahrmotor, eine Brennstoffzelle, einen Kompressor zur Zufuhr von Luft zur Brennstoffzelle und einen Elektromotor zum Antrieb des Kompressors aufweist,
**dadurch gekennzeichnet,**
daß der Kompressor (23) mit zugehörigem Elektromotor (24) im Frontbereich des Fahrzeugs (1) angeordnet ist, daß die Brennstoffzelle (15) in zumindest zwei Stacks aufgeteilt ist und daß die Brennstoffzellen-Stacks (15) auf gegenüberliegenden Seiten des Kompressors (23) angeordnet sind.

2. Fahrzeug nach Anspruch 1,
**dadurch gekennzeichnet,**
daß ein Kühlerlüfter (38) für einen Brennstoffzellen-Kühler (33) vorgesehen ist und daß der Kühlerlüfter (38), der Elektromotor (24) und der Kompressor (23) auf einer gemeinsamen Antriebswelle angeordnet sind.

3. Fahrzeug nach Anspruch 1,
**dadurch gekennzeichnet,**
daß zusätzlich eine Wasserpumpe (29) auf der gemeinsamen Antriebswelle angeordnet ist.

## Claims

1. An arrangement of a drive unit in a vehicle having at least one electric drive motor, one fuel cell, one compressor to supply air to the fuel cell and one electric motor to drive the compressor,
**characterised in that**,
the compressor (23) and its electric motor (24) are located in the front part of the vehicle (1), that the fuel cell (15) is divided into at least two stacks and that the fuel cell stacks (15) are arranged on opposite sides of the compressor (23).

2. A vehicle in accordance with Claim 1,
**characterised in that**,
a radiator fan (38) for a fuel cell radiator (33) is provided and that the radiator fan (38), the electric motor (24) and the compressor (23) are arranged on a common drive shaft.

3. A vehicle in accordance with Claim 1,
**characterised in that**,
a water pump (29) is also arranged on the common drive shaft.

## Revendications

1. Agencement d'un groupe propulseur dans un véhicule qui présente au moins un moteur de propulsion électrique, une pile à combustible, un compresseur pour l'envoi de l'air à la pile à combustible et un moteur électrique pour l'entraînement du compresseur,
caractérisé
en ce que le compresseur (23), avec son moteur électrique (24), est disposé dans la zone avant du véhicule (1), en ce que la pile à combustible (15) est subdivisée en au moins deux empilements et en ce que les empilements (15) de la pile à combustible sont disposés de part et d'autre du compresseur (23).

2. Véhicule selon la revendication 1,
caractérisé
en ce qu'il est prévu un ventilateur (38) de radiateur pour un radiateur (33) de pile à combustible, et en ce que le ventilateur (38) du radiateur, le moteur électrique (24) et le compresseur (23) sont montés sur un arbre d'entraînement commun.

3. Véhicule selon la revendication 1,
caractérisé
en ce qu'en supplément, une pompe à eau (29) est montée sur l'arbre d'entraînement commun.
